# EUROPEAN PATENT APPLICATION

(11) **EP 2 451 042 A1**
(43) Date of publication of application: **09.05.2012**
(21) Application number: 10793966.2
(22) Date of filing: 08.06.2010
(51) Int. Cl.: H02J 3/38

(54) **POWER DISTRIBUTION SYSTEM**

(30) Priority: 30.06.2009 JP 2009156110
(71) Applicant: Panasonic Corporation, Osaka 571-8501 (JP)
(72) Inventor: CYUZAWA, Takaaki, Kadoma-shi Osaka 571-8686 (JP); SHINAGAWA, Mikio, Kadoma-shi Osaka 571-8686 (JP)
(74) Representative: Appelt, Christian W.
(86) International application number: PCT/JP2010/059714
(87) International publication number: WO 2011/001796

(57) **Abstract**

A system coordination unit **1** includes a reverse power flow prevention circuit 10. When power output from a fuel cell **6** and/or a secondary cell **7** exceeds power consumed in AC loads and DC loads, the reverse power flow prevention circuit **10** prevents a reverse flow of excess power into a commercial power source **4.** The reverse power flow prevention circuit **10** is interposed in an AC main power path **20** between a connection point of a solar cell 5 and the AC main power path 20 and each of a connection point of a fuel cell **6** and the AC main power path **20** and a connection point of a secondary cell **7** and the AC main power path **20.** The reverse power flow prevention circuit **10** compares the power output from the fuel cell **6** and/or the secondary cell 7 with the power consumed in the AC loads and the DC loads. Upon determining that the former power is not less than the latter power, the reverse power flow prevention circuit **10** electrically interrupts the AC main power path **20.** Consequently, the reverse power flow of the power generated by the fuel cell 6 and/or the secondary cell **7** into the commercial power source **4** is prevented by making use of only one reverse power flow prevention circuit **10.** Therefore, in comparison with a ease where each distributed power source other than a solar cell **5** is provided with a reverse current flow prevention device, the system can be implemented at a low cost.

## Description

### Technical Field

The present invention relates to a power distribution system employing a solar cell and a distributed power source other than a solar cell.

### Background Art

In the past, there has been a system which includes a solar cell connected to a commercial power source in parallel and performs system coordination operation of supplying power to loads from the commercial power source and the solar cell. Such a system is well known as a power distribution system adopting a solar cell as a distributed power source. In such a power distribution system, during the daytime, the solar cell can generate sufficient power, and therefore generated power of the solar cell is likely to exceed consumed power and cause an excess (hereinafter referred to as "excess power") of power. In this situation, this power distribution system can sell the excess power to a power company by feeding the excess power to the commercial power system (cf., JP 2003. 189477 A).

Recently, the power distribution system which further includes a distributed power source (e.g., a fuel cell and a secondary cell) other than a solar cell has been provided. Besides, in this power distribution system, a power storage device is also treated as a type of the distributed power source. According to this power distribution system, the distributed power source can provide enough power to loads even during night that the solar cell would generate lowered power.

However, currently in Japan, in consideration of adverse effect on a commercial power system, selling electric power is allowed only with regard to a solar cell. In brief, with regard to a distributed power source (e.g., a fuel cell and a secondary cell) other than a solar cell, selling electric power is not allowed. Therefore, "guideline for technical requirements for interconnection regarding ensuring power quality" stipulates that even if surplus power is produced by a fuel cell and a secondary cell, the surplus power should not flow into the commercial power system. Generally, a distributed power source (e.g., a fuel cell and a secondary cell) other than a solar cell is individually provided with a reverse power flow prevention device for preventing a reverse power flow.

When the power distribution system includes plurality distributed power sources other than a solar cell, and when each distributed power source (e.g., a fuel cell and a secondary cell) other than a solar cell is provided with a reverse power flow prevention device, the power distribution system includes the multiple reverse power flow prevention devices as a whole. The reverse power flow prevention device has a complicated construction for protection of the commercial power system. Therefore, addition of plural reverse power flow prevention devices prevents lowering a cost for implementing the power distribution system.

### Disclosure of Invention

In view of the above insufficiency, the present invention has been aimed to propose a power distribution system which can be implemented at a lowered cost in comparison with a configuration where each distributed power source other than a solar cell is provided with a reverse power flow prevention device.

The power distribution system in accordance with the present invention includes: a first distributed power source defined as a solar cell; a second distributed power source including a plurality of distributed power sources other than the first distributed power source; and a main power path adapted for supplying power to a load and connected to the first distributed power source, the second distributed power source, and a commercial power source. The first distributed power source is connected to the main power path at a connection point between a connection point of the commercial power source and the main power path and a connection point of the second distributed power source and the main power path. The power distribution system further includes a reverse power flow prevention circuit interposed in the main power path between the connection point of the first distributed power source and the main power path and the connection point of the second distributed power source and the main power path, and configured to interrupt the main power path in response to occurrence of excess power in the distributed power source.

According to the above configuration, in contrast to a situation where each distributed power source other than the solar cell is provided with a reverse current flow prevention device, whereby the power distribution system can be implemented at a lowered cost.

In this power distribution system, preferably, the main power path includes an AC main power path adapted for supplying AC power to an AC load and a DC main power path adapted for supplying DC power to a DC load. The power distribution system further comprises a power conversion circuit interposed between the AC main power path and the DC main power path, the power conversion circuit being configured to convert an alternate current supplied from the AC main power path to a direct current to be supplied to the DC main power path. The first distributed power source is connected to the DC main power path without passing through the power conversion circuit.

### Brief Description of Drawings

FIG. 1 is a schematic diagram illustrating the configuration of the power distribution system in accordance with the first embodiment,
FIG. 2 is a schematic diagram illustrating the configuration of the power distribution system in accordance with the second embodiment,
FIG. 3 is a schematic diagram illustrating the configuration of the power distribution system in accordance with the third embodiment, and
FIG. 4 is a schematic diagram illustrating the configuration of the power distribution system in accordance with the fourth embodiment.

### Best Mode for Carrying Out the Invention

### (FIRST EMBODIMENT)

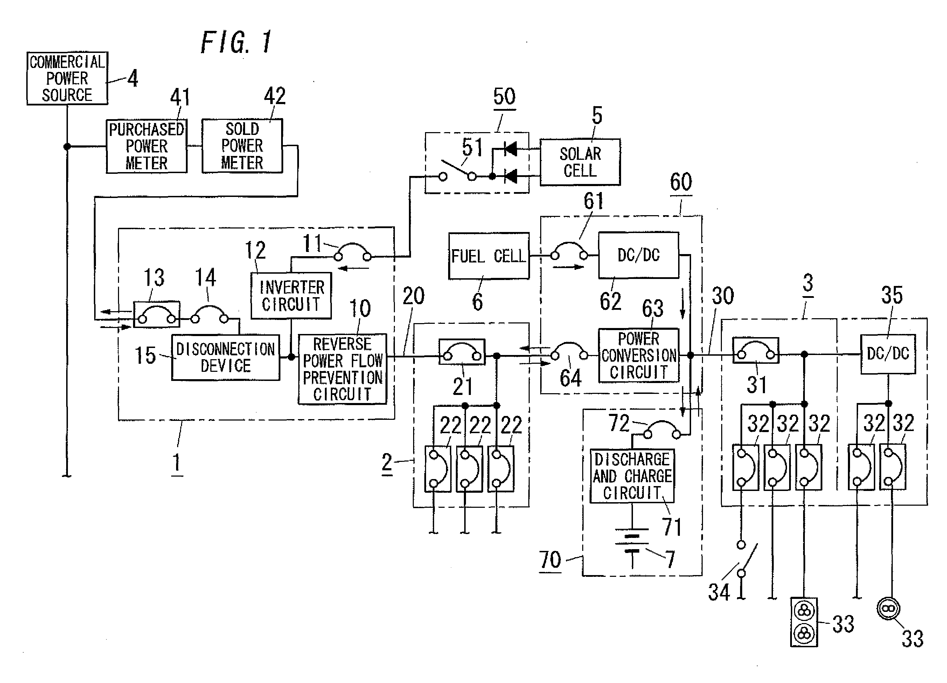

As shown in FIG. 1, the power distribution system of the present embodiment is used for distributing power to loads (electric devices) installed in a residence, and includes an AC distribution board **2** and a DC distribution board **3.** The AC distribution board **2** is placed in a predetermined position in the residence, and is configured to supply AC power to an AC powered load (hereinafter, referred to as "AC load"). The DC distribution board **3** is placed in a predetermined position in the residence, and is configured to supply DC power to a DC powered load (hereinafter, referred to as "DC load").

The AC distribution board **2** is configured to accommodate a main breaker **21** being an earth leakage circuit breaker, and a plurality of branch breakers **22.** Connecting a load circuit used in AC power to the branch breaker **22** enables supplying AC power to an AC load (not shown). The main breaker **21** is interposed in the AC main power path **20** connected to a commercial power source **4.** Each branch breaker **22** is connected to a secondary side terminal of the main breaker **21.** Besides, the above load circuit includes a wiring device (e.g., an AC outlet adapted to be installed in a room, and a wall switch) and a lighting fixture, for example. The commercial power source **4** is adapted to be used in a single-phase three-wire system. The commercial power source **4** is connected to the main breaker **21** by use of the AC main power path **20** composed of three lines including a neutral line and a pair of voltage lines.

Each branch breaker **22** includes power terminals (not shown), and is electrically connected to the main breaker **21** in such a manner that the power terminals are respectively connected to only two of the three lines (neutral line and paired voltage lines) via the secondary side terminal of the main breaker **21.** When being connected to the neutral line and any one of the voltage lines, the branch breaker **22** receives an AC voltage of **100** V. When being connected to the paired voltage lines, the branch breaker **22** receives an AC voltage of **200** V. In addition, each branch breaker **22** includes a load terminal (not shown) adapted in use to be connected to a load circuit, and contact points (not shown) interposed between its power terminal and its load terminal. The branch breaker **22** turns on and off power supply to the corresponding load circuit by opening and closing its contact points.

The power distribution system of the present embodiment includes a solar cell **5,** a fuel cell **6,** and a secondary cell **7** as a distributed power source. The solar cell **5** defines a first distributed power source, and the fuel cell **6** and the secondary cell **7** define a second distributed power source.

The solar cell **5** is connected to the AC main power path **20** by way of a connection box **50,** a switch **11,** and an inverter circuit **12** configured to convert a direct current to an alternate current. The connection box **50** includes an array switch **51** and is configured to collect electrical power generated at the solar cell **5.** The inverter circuit **12** is connected to primary side terminals (terminals for connection with the commercial power source **4**) of the main breaker **21** via the AC main power path **20.** The inverter circuit **12** converts the output voltage of the solar cell **5** to an AC voltage of the same voltage value and frequency as an output voltage of the commercial power source **4.** The resultant AC voltage is applied to an AC load via the AC distribution board **2.** Besides, the switch **11** and the inverter circuit **12** constitute a system coordination unit 1 in cooperation with an entrance device **13** or the like. The entrance device **13** is used for connecting the commercial power source **4** to the AC main power path **20.**

In this power distribution system, during the daytime, the solar cell **5** can generate sufficient power, and therefore the generated power of the solar cell **5** is likely to exceed the power consumed in loads and cause an excess (hereinafter referred to as "excess power") of power. This power distribution system is configured to supply the excess power to the commercial power system in order to sell the excess power to a power company. Therefore, a purchased power meter **41** and a sold power meter **42** are interposed between the commercial power source **4** and the system coordination unit **1.** The purchased power meter **41** is configured to measure power supplied from the commercial power source **4** to a consumer. The soled power meter **42** is configured to measure power fed from the consumer to the commercial power source **4.**

The DC distribution board **3** is configured to accommodate a main breaker **31** being an earth leakage circuit breaker, and a plurality of branch protectors **32.** The main breaker **31** is interposed in the DC main power path **30** connected to the fuel cell **6** and the secondary cell **7.** Each branch protector **32** is connected to a secondary side terminal of the main breaker **31.** The fuel cell **6** is connected to a primary side terminal of the main breaker **31** via a switch **61** and a DC/DC converter **62.** The secondary cell **7** is connected to the primary side terminal of the main breaker **31** via a discharge and charge circuit **71** and a switch **72.** The discharge and charge circuit **71** is configured to discharge and charge the secondary cell **7.** The secondary cell **7** constitutes a power storage unit **70** in cooperation with the discharge and charge circuit **71** and the switch **72.**

Therefore, connecting a load circuit used in DC power to the branch protector **32** enables supplying DC power to a DC load (not shown) from at least one of the fuel cell **6** and the secondary cell **7.** Besides, the above load circuit includes a wiring device (e.g., a DC outlet **33** and a wall switch **34**) and a lighting fixture, for example. The DC outlet **33** includes a pair of feeding portions (a positive electrode and a negative electrode), and is adapted to be placed in a room. The branch protector **32** is configured to monitor a current passing through the corresponding load circuit. Upon detecting a malfunction (e.g., short circuit), the branch protector **32** lowers power supplied to the corresponding DC load or terminates supplying power to the corresponding DC load.

The DC load is classed into a high voltage DC load and a low voltage DC load. The high voltage DC load is defined as a device operating with relatively high voltage (e.g., 300 V), such as an air conditioner and a refrigerator. The low voltage DC load is defined as a device operating with relatively low voltage (e.g., 48 V), such as a telephone, a personal computer, and a liquid crystal television. Hence, the DC distribution board **3** includes a DC/DC converter **35** for lowering voltage. The low voltage DC load is connected to an output terminal of the DC/DC converter **35** via the branch protector **32.**

The DC main power path (a path connected to the primary side terminal of the main breaker **31**) and the AC main power path (a path connected to the secondary side terminal of the main breaker **21**) **20** are connected to each other via a power conversion circuit **63.** The power conversion circuit **63** is connected to the AC man power path **20** via a switch **64.** The power conversion circuit **63** is configured to convert AC to DC and DC to AC. The power conversion circuit **63** is configured to convert AC power received from the AC main power path **20** to DC power and then output the resultant DC power to the DC main power path **30.** Further, the power conversion circuit **63** is configured to convert DC power received from the DC main power path **30** to AC power and then output the resultant AC power to the AC main power path **20.** Consequently, when the commercial power source **4** and the solar cell **5** fail to supply sufficient power to the AC load by themselves, the fuel cell **6** and the secondary cell **7** can supplement the power required by the AC load. Meanwhile, when the fuel cell **6** and the secondary cell **7** fail to supply sufficient power to the DC load by themselves, the commercial power source **4** and the solar cell 5 can supplement the power required by the DC load. The power conversion circuit **63** and the switch **64** constitute a converter unit **60** in cooperation with the DC/DC converter **62** and the switch **61** for the fuel cell **6.**

The power distribution system which has the configuration explained in the above includes a control unit (not shown) configured to control power obtained from each of the solar cell **5,** the fuel cell **6,** and the secondary cell **7.** The control unit is configured to receive load information including consumed power, and is configured to turn on and off each of the switches **11, 61, 64,** and **72** independently. The switch **11** is interposed between the solar cell **5** and the main power path **20, 30.** The switch **61** is interposed between the fuel cell **6** and the main power path **20, 30.** The switch **72** is interposed between the secondary cell **7** and the main power path **20, 30.** The switch **64** is interposed between the power conversion circuit **64** and the AC main power path **20.** For example, during the daytime that the solar cell **5** can generate sufficient power, the control unit keeps turning off the switch **61** of the switches **11, 61, 64,** and **72,** thereby separating the fuel cell **6** from the DC main power path **30.** Hence, the power generated by the solar cell **5** is supplied to loads in preference to the other distributed power sources. In this situation, the control unit controls the discharge and charge circuit **71** in such a manner to charge up the secondary cell **7** with output from the solar cell **5.** Meanwhile, during the night that the solar cell **5** would fail to generate sufficient power, the control unit keeps turning on the switch **61,** thereby connecting the fuel cell **6** to the DC main power path **30.** Hence, the power generated by the fuel cell **6** is supplied to loads in preference to the other distributed power sources. In this situation, the control unit controls the discharge and charge circuit **71,** thereby discharging the secondary cell **7** in order to cover a shortage occurring when the fuel cell **6** fails to provide sufficient power by itself.

Consequently, the power distribution system can provide as much power as required by the loads in a residence from the distributed power sources (the solar cell 5, the fuel cell **6,** and the secondary cell **7**) without using the power supplied from the commercial power source **4.** Further, the control unit is configured to turn off the switch **11** corresponding to the solar cell 5, upon detecting a malfunction of the solar cell **5.** The control unit is configured to turn off the switch **61** corresponding to the fuel cell **6,** upon detecting a malfunction of the fuel cell **6.** Hence, the control unit has a function of protect the commercial power system from adverse effect caused by the malfunction of the solar cell **5** and/or the fuel cell **6.**

Besides, in this power distribution system, the system coordination unit **1** includes a disconnection device **15** for separating the distributed power sources (the solar cell 5, the fuel cell **6,** and the secondary cell **7**) from the commercial power source **4** in response to occurrence of a power failure (outage) of the commercial power source **4.** The disconnection device **15** is configured to turn off (open) a switch **14,** upon detecting islanding operation of the distributed power sources. The switch **14** is interposed between the entrance device **13** and the AC main power path **20.** Consequently, when the power failure of the commercial power source **4** occurs, the commercial power source **4** is separated from the AC main power path **20** in the system coordination unit **1.** Therefore, the AC loads and the DC loads are energized by the distributed power sources and then operate. In the instance shown in FIG. 1, the AC main power path **20** is defined as a path between the disconnection device **15** and the power conversion circuit **63,** and the DC main power path **30** is defined as a path between the power conversion circuit **63** and the DC/DC converter **35.**

Moreover, in the power distribution system of the present embodiment, the system coordination unit **1** includes a reverse power flow prevention circuit **10.** The reverse power flow prevention circuit **10** is configured to prevent a reverse flow of the excess power into the commercial power source **4,** when the fuel cell **6** and/or the secondary cell **7** outputs the power exceeding the power consumed in the AC loads and the DC loads. Currently in Japan, power generated by the solar cell **5** is allowed to be sold, but power generated by the distributed power source (e.g., the fuel cell **6** and the secondary cell **7**) other than the solar cell **5** is prohibited to be sold. Therefore, the reverse power flow prevention circuit **10** is provided for preventing the reverse flow of power generated by the fuel cell **6** and/or the secondary cell **7.**

When power output from the fuel cell **6** and/or the secondary cell **7** exceeds power consumed in the AC loads and the DC loads in the residence, it can be assumed that the excess power is generated in the fuel cell **6** and/or the secondary cell **7.** On the basis of the above assumption, the reverse power flow prevention circuit **10** is interposed in the AC main power path **20** between a connection point of the inverter circuit **12** for the solar cell **5** and the AC main power path **20** and a connection point of the AC distributed power board **2** and the AC main power path **20.** Further, the reverse power flow prevention circuit **10** is configured to compare the power output from the fuel cell **6** and/or the secondary cell **7** with the power consumed in the AC loads and the DC loads. The reverse power flow prevention circuit **10** is configured to, upon judging that the power output from the fuel cell **6** and/or the secondary cell **7** is not less than the power consumed in the AC loads and the DC loads, determine the generation of the excess power and then electrically separate the AC distributed board **2** from the commercial power source **4.** Accordingly, it is possible to prevent the reverse flow of the power generated by the fuel cell 6 and/or the secondary cell 7 into the commercial power source **4.**

Alternatively, the reverse power flow prevention circuit **10** may be configured to, upon determining the generation of the excess power in the fuel cell **6** and/or the secondary cell **7,** connect a load (hereinafter referred to as "spare load") to a part of the AC main power path **20** close to the AC distributed board **2.** Consequently, the excess power produced by the fuel cell **6** and/or the secondary cell 7 is supplied to the spare load, and then is consumed in the spare load. Therefore, it is possible to make efficient use of the excess power. For example, when the spare load is a heater for heating water, the excess power can be used as thermal energy in the residence.

According to the above explained configuration, the reverse power flow from the plural distributed power sources (the fuel cell **6** and the secondary cell **7**) can be prevented by use of the only one reverse power flow prevention circuit **10.** The reverse power flow prevention circuit **10** is interposed in the AC main power path **20** downstream of the connection point of the solar cell **5** and the AC main power path **20** and upstream of the connection point of the distributed power source (e.g., the fuel cell **6** and the secondary cell **7**) and the AC main power path **20.** Therefore, the reverse power flow prevention circuit **10** can prevent all the reverse power flow from the distributed power sources other than the solar cell **5,** yet allowing the reverse power flow from the solar cell **5.** Consequently, the power distribution system can reduce the number of the reverse power flow prevention circuits thereof, in contrast to a situation where each distributed power source other than the solar cell **5** is provided with a reverse current flow prevention device, whereby the power distribution system can be implemented at a lowered cost.

Besides, the present embodiment exemplifies the power distribution system which has the second distributed power source including the fuel cell **6** and the secondary cell **7,** but is not limited to the above explained instance. For example, the power distribution system may have the second distributed power source including-plural fuel cells **6,** plural secondary cells **7,** plural other distributed power sources (other than solar cells **5**), or a combination thereof.

### (SECOND EMBODIMENT)

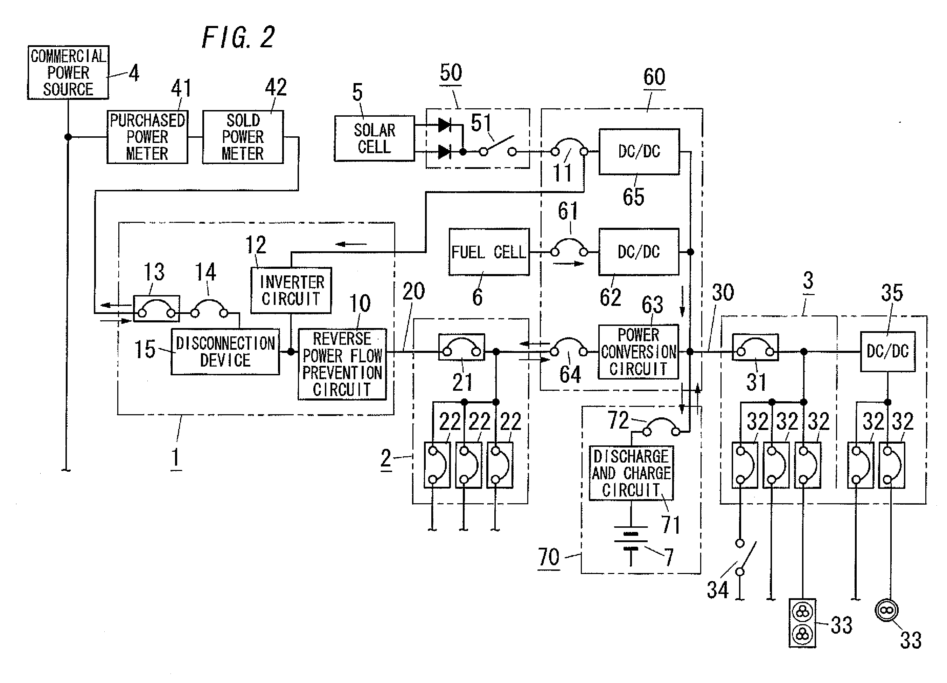

As shown in FIG. 2, the power distribution system of the present embodiment is different from the power distribution system of the first embodiment in that the solar cell **5** is connected to the DC main power path **30** without passing through the power conversion circuit **63.**

In the present embodiment, the solar cell **5** is connected to a DC/DC converter **65** via the connection box **50** and the switch **11.** The DC/DC converter **65** has its output terminal connected to the primary side terminal of the main breaker **31** of the DC distributed board **3.** Further, the solar cell **5** is also connected to the inverter circuit **12** of the system coordination unit **1** via the switch **11** without passing through the DC/DC converter **65.**

In the present embodiment, the control unit may be configured to keep turning off the switch **64** between the power conversion circuit **63** and the AC main power path **20** so as to separate the AC main power path **20** from the DC main power path **30** during the daytime that the solar cell **5** would generate sufficient power. With this arrangement, the power generated by the solar cell **5** can be supplied to both the AC load and the DC load.

According to the above explained configuration, the DC power generated by the solar cell **5** can be supplied directly to the DC main power path **30.** Therefore, in contrast to a situation where the DC power generated by the solar cell **5** is converted to AC power by the inverter circuit **12** and subsequently is converted to DC power by the power conversion circuit **63,** it is possible to reduce power conversion loss.

The other components and functions of the present embodiment are same as those of the first embodiment.

### (THIRD EMBODIMENT)

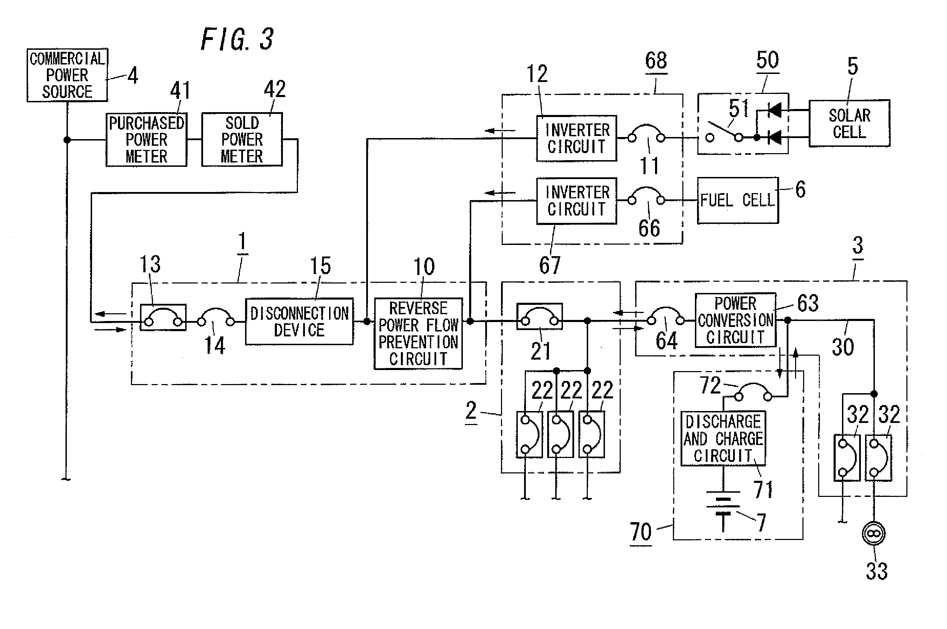

As shown in FIG. 3, the power distribution system of the present embodiment is different from the power distribution system of the first embodiment in that the fuel cell **6** is connected to the AC main power path 20 without passing through the power conversion circuit **63.**

In the present embodiment, the fuel cell 6 is connected to an inverter circuit **67** via a switch **66.** The inverter circuit **67** is configured to convert DC supplied from the fuel cell **6** to AC to be supplied to the AC main power path **20.** The inverter circuit **67** has its output terminal connected to the primary side terminal of the main breaker **21** of the AC distributed board **2.** In brief, the reverse power flow prevention circuit **10** is interposed in the AC main power path **20** between the connection point of the solar cell **5** and the AC main power path **20** and the connection point of the fuel cell **6** and the AC main power path **20.** The switch **11** and the inverter circuit **12** for the solar cell **5** are separated from the system coordination unit **1** and constitute the inverter unit **68** in cooperation with the switch **66** and the inverter circuit **67** for the fuel cell **6.**

Further, the present embodiment is designed to supply power to only the low voltage DC loads of the DC loads. Therefore, the DC distributed board **3** is devoid of the DC/DC converter **35,** and the present embodiment is configured to supply the output power from the power conversion circuit **63** to the low voltage DC load via the branch protector **32.** Besides, in the instance shown in FIG. 3, the converter unit **60** is optional, and the power conversion circuit **63** and the switch **64** are housed in the DC distributed board **3.**

According to this configuration, for example, even when the power conversion circuit **63** malfunctions, the power distribution system can supply the power generated by the solar cell **5** and/or the fuel cell **6** to the AC main power path **20,** thereby providing as much power as required from loads in the residence without using the power supplied from the commercial source **4.**

The other components and functions of the present embodiment are same as those of the first embodiment.

### (FOURTH EMBODIMENT)

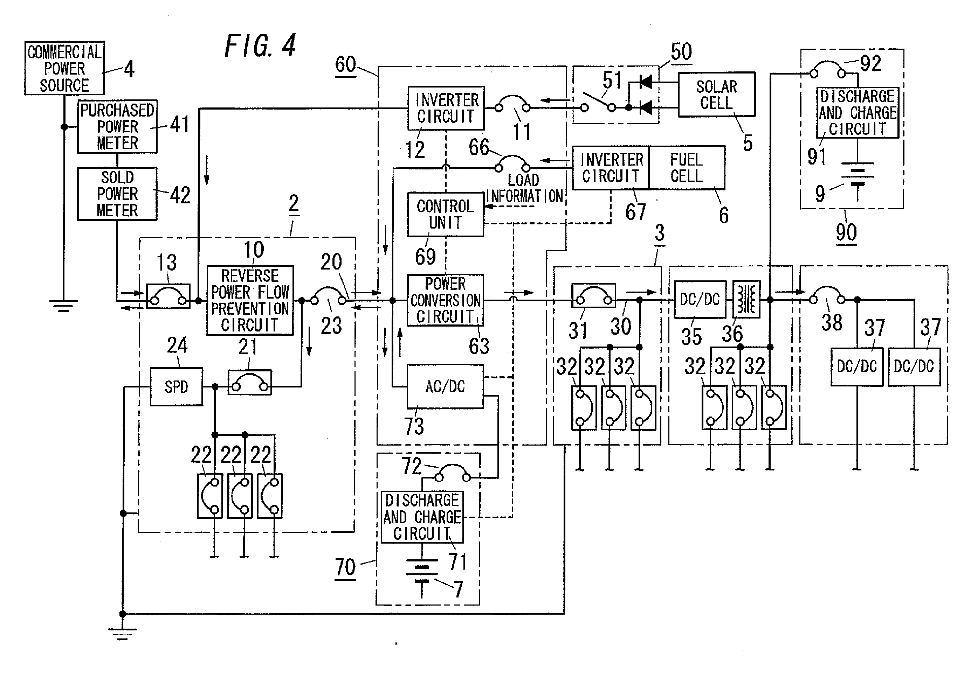

As shown in FIG. 4, the power distribution system of the present embodiment is different from the power distribution system of the first embodiment in that the present embodiment includes an emergency power storage unit **90** in addition to the power storage unit **70.** The emergency power storage unit **90** includes a secondary cell **9,** a discharge and charge circuit **91,** and a switch **92.**

In the present embodiment, the low voltage DC load is defined as an emergency load (e.g., an emergency lamp) configured to be kept being turned on even during the power failure of the commercial power source **4.** The present embodiment includes the emergency power storage unit **90** in order to successfully provide power used for operating the emergency load during the power outage of the commercial power source **4.** A safety isolating transformer **36** is interposed in the DC main power path **30** between the DC/DC converter 35 and the branch protectors **32** which is adapted in use to be connected to the low voltage DC loads. The emergency power storage unit **90** is connected to a secondary side terminal of the safety isolating transformer **36** by way of the DC main power path **30.**

In the present embodiment, the low voltage DC load includes a load configured to operate with an operating voltage (e.g., 24 V, 12 V, and 5 V) lower than the output voltage (e.g., 48 V) of the DC/DC converter **35.** Such a load is connected to the safety isolating transformer **36** via a DC/DC converter **37** which is configured to lower the output voltage from the secondary side terminal of the safety isolating transformer **36** into the operating voltage of the load. There is a switch **38** interposed between the safety isolating transformer **36** and each DC/DC converter **37.** In the instance shown in FIG. 4, the DC main power path **30** is defined as a path between the power conversion circuit **63** and the DC/DC converter **37.** Besides, the circuit connected to the secondary side terminal of the safety isolating transformer **36** acts as a safety extra-low voltage (SELV) circuit.

Further, the fuel cell **6** and the power storage unit **70** are connected to the AC main power path **20** without passing through the power conversion circuit 63. For example, the inverter circuit **67** is attached to the fuel cell **6,** and is configured to convert DC power output from the fuel cell **6** to AC power to be output to the AC main power path **20.** The inverter circuit **67** has its output terminal connected to the AC main power path **20** via the switch **66.** The power storage unit **70** is connected to the AC main power path **20** via an AC/DC converter **73** configured to convert AC supplied from the AC main power path **20** to DC to be supplied to the power storage unit **70** and to convert DC supplied from the power storage unit **70** to AC to be supplied to the AC main power path **20.** In the present embodiment, the power conversion circuit **63** of the converter unit **60** is configured to convert AC to DC but is not configured to convert DC to AC. Besides, in the instance shown in FIG. 4, the system coordination unit **1** is optional, and the switch 11 and the inverter circuit **12** for the solar cell **5** constitute the converter unit **60** in cooperation with the AC/DC converter **73** for the power storage unit **70** and the power conversion circuit **63.**

The converter unit **60** includes a control unit **69** configured to control the inverter circuit **12** for the solar cell **5,** the inverter circuit **67** for the fuel cell **6,** the AC/DC converter **73** for the power storage unit **70,** the discharge and charge circuit **71,** and the power conversion circuit **63.** The control unit **69** is configured to receive the load information including the consumed power, and is configured to adjust the power obtained from each of the solar cell **5,** the fuel cell **6,** and the secondary cell **7.**

The entrance device **13** and the reverse power flow prevention circuit **10** are housed in the AC distributed board **2,** and are connected to an AC input terminal of the power conversion circuit **63** via a primary side power transfer breaker **23.** The main breaker **21** of the AC distributed board **2** is connected between the reverse power flow prevention circuit **10** and the primary side power transfer breaker **23.** A serge protector **24** is interposed between the ground and a connection point of the main breaker **21** and the branch breaker **22.** Besides, the disconnection device **15** is not shown in FIG. **4****.**

According to the above configuration, the power distribution system keeps the emergency power storage unit **90** almost fully charged during normal time, and discharges the emergency power storage unit **90** only during the power failure of the commercial power source **4.** Therefore, it is possible to successfully reserve power in the emergency power storage unit **90** for operating the low voltage DC load during the power failure of the commercial power source **4.** Moreover, the emergency power storage unit **90** is directly connected to the DC main power path **30.** Therefore, the power distribution system can efficiently supply power to the low voltage DC load without causing loss accompanying power conversion between DC and AC. Consequently, the power storage unit **70** need not reserve power for operating the low voltage DC load during the power outage of the commercial power source **4.** With charging the power storage unit **70** during a time period that power consumption is relatively low, and discharging the power storage unit **70** during a time period that power consumption is relatively high, the power storage unit **70** can be utilized for load leveling.

Besides, the emergency power storage unit **90** is preferred to be placed adjacent to the low voltage DC load. In this instance, it is possible to reduce power loss caused by the DC main power path **30** between the emergency power storage unit **90** and the low voltage DC load.

The other components and functions of the present embodiment are same as those of the first embodiment.

## Claims

1. A power distribution system comprising:
a first distributed power source defined as a solar cell;
a second distributed power source including a plurality of distributed power sources other than said first distributed power source; and
a main power path adapted for supplying power to a load and connected to said first distributed power source, said second distributed power source, and a commercial power source,
wherein said first distributed power source is connected to said main power path at a connection point between a connection point of said commercial power source and said main power path and a connection point of said second distributed power source and said main power path,
said power distribution system further comprising a reverse power flow prevention circuit interposed in said main power path between the connection point of said first distributed power source and said main power path and the connection point of said second distributed power source and said main power path, and configured to interrupt said main power path in response to occurrence of excess power in said distributed power source.

2. A power distribution system as set forth in claim 1, wherein
said main power path includes an AC main power path adapted for supplying AC power to an AC load and a DC main power path adapted for supplying DC power to a DC load,
said power distribution system further comprising a power conversion circuit interposed between said AC main power path and said DC main power path, said power conversion circuit being configured to convert an alternate current supplied from said AC main power path to a direct current to be supplied to said DC main power path, and said first distributed power source being connected to said DC main power path without passing through said power conversion circuit.
